# EUROPEAN PATENT APPLICATION

(11) **EP 4 328 078 A1**
(43) Date of publication of application: **28.02.2024**
(21) Application number: 22192368.3
(22) Date of filing: 26.08.2022
(51) Int. Cl.: B60L 53/63, B60L 53/64, B60L 53/68, B60L 58/13, G06Q 10/00, H02J 1/00

(54) **METHOD AND DEVICE FOR SCHEDULING CHARGING OF AN ELECTRICAL VEHICLE**

(71) Applicant: Peak Energy AB, 22467 Lund (SE)
(72) Inventor: Elander, Jakob, 22467 LUND (SE); Stala, Michal, 22731 LUND (SE); Marklund, Oscar, 22219 LUND (SE)
(74) Representative: AWA Sweden AB

(57) **Abstract**

A computer implemented method (100) for scheduling charging of an electrical vehicle is provided. The method (100) comprises determining (10) a minimum state of charge for the electrical vehicle, determining (20) a maximum state of charge for the electrical vehicle, and determining (30) a scheduling function (F1). The method (100) further comprises determining (40) one or more mandatory charging time periods (T1, T2, T3) upon which charging of the electrical vehicle is mandatory in order to reach the minimum state of charge. The method (100) further comprises determining (50) one or more potential charging time periods (TP1, TP2, TP3, TP4) upon which charging of the electrical vehicle is potential in order to reach the maximum state of charge. The method (100) further comprises scheduling (60) charging of the electrical vehicle during the one or more mandatory charging time periods (T1, T2, T3), and scheduling (70) charging of the electrical vehicle during a potential charging time period. A server (200) on which the method (100) is implemented is also provided.

## Description

### TECHNICAL FIELD

The present disclosure belongs to methods and devices for scheduling charging of an electrical vehicle.

### BACKGROUND

The number of electrical vehicles, EVs, in society is presently increasing at an unprecedented rate. Some rationales for this rapid increase are the strive for reducing carbon dioxide, CO2, emission, and the relatively high power versus price ratio compared to traditional vehicle fuels. Often EVs are set to charge overnight, e.g., at garage driveway or at a parking garage.

The demand for outtake of electrical power from the electrical grid is typically fluctuating with time. Hence, the electrical grid typically experiences peak loads. With the knowledge of that the number of EVs is rapidly increasing problems with peak demand in the electrical grid may increase in the future.

Further, in order to reduce environmental pollution, e.g., reducing CO2 emission, many users wish to use electricity from sustainable electricity power plants based on, e.g., solar, wind and/or wave energy. However, the production of electricity of such sustainable electricity power plants heavily depends on the weather such that the amount of sustainable electricity may vary significantly over time.

Moreover, the price of electrical power (price per kWh) is also varying over time.

With the above in mind, there is a need for an improved approach for scheduling charging of an electrical vehicle accounting for peak demand, availability of sustainable energy and/or price.

### SUMMARY

An objective of the inventive concept is provision of an improved approach for scheduling charging of an electrical vehicle.

According to a first aspect, there is provided a computer implemented method for scheduling charging of an electrical vehicle. The method comprises determining a minimum state of charge for the electrical vehicle; determining a maximum state of charge for the electrical vehicle; and determining a scheduling function. The scheduling function is determined based on a temporally resolved probability of that the electrical vehicle is connected to an electrical grid, and a temporally resolved distribution of one or more of: available electrical power in the electrical grid, price for electrical power in the electrical grid, and CO2 emission for producing the electrical power in the electrical grid. The method further comprises determining one or more mandatory charging time periods upon which charging of the electrical vehicle is mandatory in order to reach the minimum state of charge based on a current state of charge, a time upon which the electrical vehicle is scheduled to be used again, a charging speed, the scheduling function, and the minimum state of charge; and determining one or more potential charging time periods upon which charging of the electrical vehicle is potential in order to reach the maximum state of charge based on the current state of charge, the time upon which the electrical vehicle is scheduled to be used again, the charging speed, the scheduling function, and the maximum state of charge. The method further comprises scheduling charging of the electrical vehicle during the one or more mandatory charging time periods; and scheduling charging of the electrical vehicle during a potential charging time period upon: available electrical power in the electrical grid for the potential charging time period is above an electrical power threshold, the price for electrical power in the electrical grid for the potential charging time period is below a price threshold, and/or the CO2 emission for producing the electrical power in the electrical grid for the potential charging time period is below a CO2 threshold.

The method thereby facilitates charging of the electrical vehicle such that charging may occur while the available power in the electrical grid is relatively large, the price for electrical power is relatively low, and/or CO2 emission for producing the electrical power is relatively low. Hence, the user may charge their electrical vehicle relatively cheap and possibly, at the same time, with a minimum emission of CO2. Further, charging of the electrical vehicle while the available electrical power is relatively high may facilitate provision of a smoother load on the electrical grid, which may prevent undesirable power peaks in the electrical grid. The latter is especially true if a large number of users of electrical vehicle utilize the present approach, i.e., charging their electrical vehicle in time periods in which the availability of electrical power is high.

The steps of determining the minimum and/or maximum state of charge may include input information provided by a user. Alternatively, these steps may, by a computer, be based on reasonable assumptions, default values, historical data, or the like. Yet another alternative may include a combination of the above, i.e., the computer provides a suggestion followed by confirmation, denial, or modification by the user.

The electrical vehicle may be of any kind, such as an electrical car for private use, an electrical truck, an electrical work machine such as an excavator or a forestry machine, etc. The electrical vehicle may be fully electric or partially electric. If partially electric, the electrical vehicle may have alternative fuel options such as gas, ethanol, or the like.

The method for scheduling charging of the electrical vehicle may equally well be thought of as a method for charging of the electrical vehicle.

The method may further comprise determining the electrical power threshold as a percentage above an historical average of available electrical power in the electrical grid.

The historical average may be an exponentially weighted average value.

Alternatively, or additionally, the method may further comprise determining the electrical power threshold as a percentage above future data of available electrical power in the electrical grid. This may apply accordingly in connection with some, or all *historical averages* discussed in the present specification.

The method may further comprise determining the price threshold as a percentage below an historical average of price for electrical power.

Alternatively, the method may comprise determining one or more time periods during which the price for electrical power is minimal such that the minimum state of charge for the EV is reachable at a minimal cost.

Alternatively, the method may comprise charging the EV if the price for electrical power during a time period is proportional to a historical average.

The term *proportional to the historical value* hence refers to the historical average multiplied by a number. The number, denoted N below, may vary between different charging time periods. Preferably, the magnitude of the number may be decreased for a subsequent charging time period. By way of example, should the number of charging time periods be M (M = 1, 2, 3, ...), the number Nᵢ (i = 1, 2, 3, ..., M+1) may be determined by Nᵢ₊₁=Nᵢ×X^{M}, where X is a number between 0 and 1, preferably in the range 0.5-0.99, and more preferably in the range 0.85-0.99. Hence, the number N may decrease exponentially with the number of charging time periods. It should however be appreciated that the number N may vary in many different ways within the scope of the claims, such as linearly, quadratically, logarithmically, or the like.

Alternatively, the method may comprise charging of the EV upon comparison between present price for electrical power and tomorrow's average or corresponding temporary price for electrical power. Hence, if the present price for electrical power is Y% below tomorrow's average or corresponding temporary price the EV is charged. By way of example Y may lie in the range of 20-40. The term *tomorrow s* may refer to more than one day ahead, although, according to our knowledge, the price (spot prices) for electrical power two or more days ahead is presently (year 2022) not available.

The method may further comprise determining the CO2 threshold as a percentage below an historical average of CO2 emission for producing the electrical power in the electrical grid.

The percentage may lie in the range of 20-40. However, other ranges are equally possible, depending, e.g., on the weather or other circumstances affecting the availability of sustainable electrical energy resources. The above-described features and advantages in connection with the determination of the price threshold may apply to the determination of the CO2 threshold as well, where applicable.

Preferably, the historical average is an average being relatively recent. This since available electrical power, price, and CO emission may vary significantly over a cycle of a year due to, e.g., weather, temperature, and general domestic consumption of electrical power. Hence, the historical average may be an average taken during similar circumstances regarding, e.g., weather, temperature, and general domestic consumption of electrical power. By way of example, the historical average may be an average of the preceding day or the preceding week to facilitate accuracy of the above determined quantities.

The method may further comprise determining the temporally resolved probability based on temporally resolved historical data whether the electrical vehicle was connected to the electrical grid or not. This may provide information of during which time period the available electrical power in the electrical grid, the price, and the CO2 emission for producing the electrical power are to be determined. This may facilitate efficiency of the method since considering a limited time period provides for less data, and thereby less electrical power and time. The probability function may however simply be 1 or 0, i.e., a step function such that the probability function is solely based on whether the EV is connected to the electrical grid or not. Hence, if the EV is connected to the electrical grid the probability function equals 1, while 0 otherwise.

Determination of the temporally resolved probability may further be based on if the electrical vehicle is currently connected to the electrical grid or not.

According to a second aspect, there is provided a non-transitory computer-readable storage medium having stored thereon program code portions for implementing the method according to the first aspect when executed on a device having processing capabilities.

The above-mentioned features and advantages of the method apply, when applicable, to the second aspect as well. In order to avoid undue repetition, reference is made to the above.

According to a third aspect, there is provided a server for scheduling charging of an electrical vehicle. The server comprises a transceiver configured to communicate with one or more external devices providing a minimum state of charge for the electrical vehicle, a maximum state of charge for the electrical vehicle, current state of charge for the electrical vehicle, a time upon which the electrical vehicle is scheduled to be used again, and a charging speed for the electrical vehicle. Other properties associated with the EV may be applicable. By way of example, the location of the EV may be a parameter relevant hereto in that the EV is not supposed to be charged or scheduled to be charged according to the present disclosure while connected to a fast charger present on a public charging station. The server further comprises circuitry configured to execute a scheduling function determining procedure configured to determine a scheduling function based on a temporally resolved probability of that the electrical vehicle is connected to an electrical grid, and a temporally resolved distribution of one or more of available electrical power in the electrical grid, price for electrical power in the electrical grid, and CO2 emission for producing the electrical power in the electrical grid; a charging time determining procedure configured to: determine one or more mandatory charging time periods upon which charging of the electrical vehicle is mandatory in order to reach the minimum state of charge based on the current state of charge, the time upon which the electrical vehicle is scheduled to be used again, the charging speed, the scheduling function, and the minimum state of charge, and determine one or more potential charging time periods upon which charging of the electrical vehicle is potential in order to reach the maximum state of charge based on the current state of charge, the time upon which the electrical vehicle is scheduled to be used again, the charging speed, the scheduling function, and the maximum state of charge; a charging procedure configured to schedule charging of the electrical vehicle during the one or more mandatory charging time periods, and schedule charging of the electrical vehicle during a potential charging time period upon: available electrical power in the electrical grid for the potential charging time period is above an electrical power threshold, the price for electrical power in the electrical grid for the potential charging time period is below a price threshold, and/or the CO2 emission for producing the electrical power in the electrical grid for the potential charging time period is below a CO2 threshold.

The one or more external devices may be one or more of a mobile phone, an electrical vehicle charger, the electrical vehicle itself, or any other suitable device capable to communicate with the transceiver.

The circuitry may further be configured to execute one or more of: an electrical power threshold determining procedure configured to determine the electrical power threshold as a percentage above an historical average of available electrical power in the electrical grid; a price threshold determining procedure configured to determine the price threshold as a percentage below an historical average of price for electrical power; and a CO2 threshold determining procedure configured to determine the CO2 threshold as a percentage below an historical average of CO2 emission for producing the electrical power in the electrical grid.

The circuitry may further be configured to execute a probability procedure configured to determine the temporally resolved probability based on temporally resolved historical data whether the electrical vehicle was connected to the electrical grid or not.

The transceiver may further be configured to communicate with an external device providing information pertaining to if the electrical vehicle is currently connected to the electrical grid or not, and wherein the probability procedure is further configured to determine the temporally resolved probability based on if the electrical vehicle is currently connected to the electrical grid or not.

The above-mentioned features and advantages of the method according to the first aspect apply, when applicable, to the third aspect as well. In order to avoid undue repetition, reference is made to the above.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular component parts of the device described or acts of the methods described as such device and method may vary. It is also to be understood that the terminology used herein is for purpose of describing particular embodiments only and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings does not exclude other elements or steps.

### BRIEF DESCRIPTION OF THE DRAWINGS

The above, as well as additional objects, features, and advantages of the present invention, will be better understood through the following illustrative and non-limiting detailed description of preferred embodiments, with reference to the appended drawings, where the same reference numerals will be used for similar elements, wherein:
Fig. 1 shows a flowchart of a method for scheduling charging of an electrical vehicle.
Fig. 2A shows a highly schematic temporally resolved probability of that the electrical vehicle is connected to an electrical grid.
Fig. 2B shows a highly schematic temporally resolved price for electrical power in an electrical grid.
Fig. 2C shows a highly schematic scheduling function for scheduling charging of an electrical vehicle.
Fig. 3 shows, highly schematically, a server for scheduling charging of an electrical vehicle.

### DETAILED DESCRIPTION

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and to fully convey the scope of the invention to the skilled person.

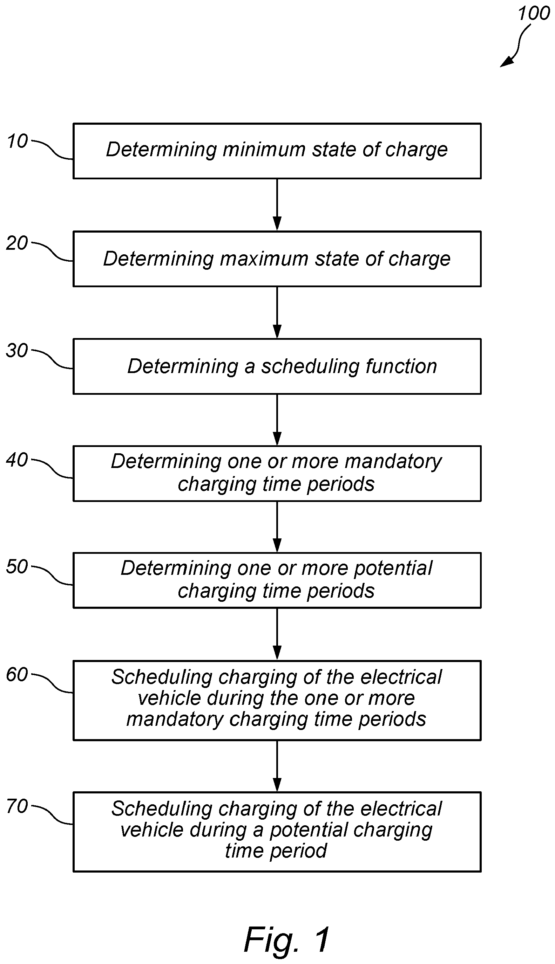

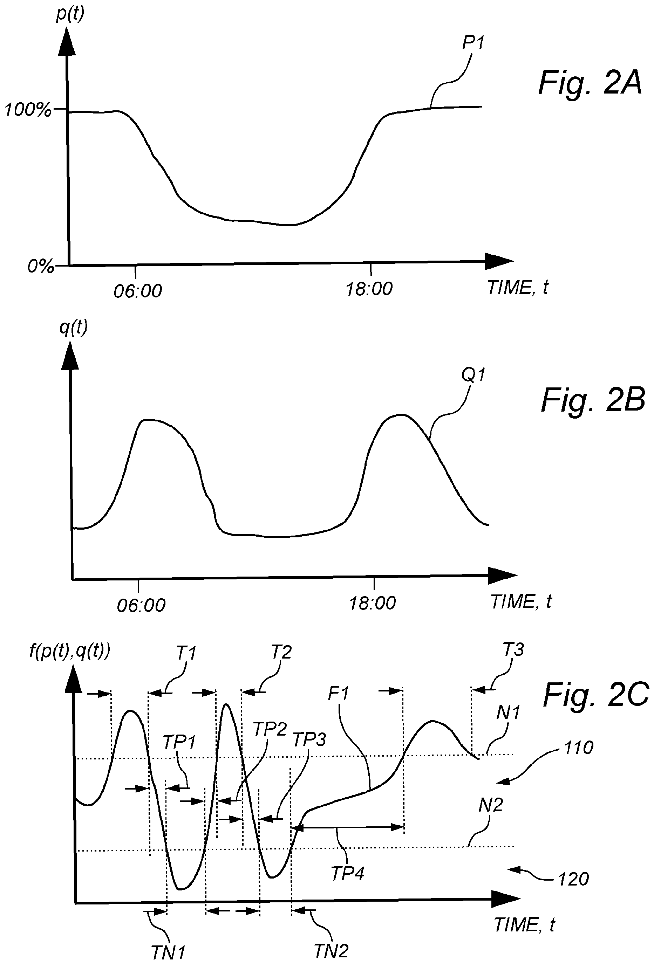

In connection with Fig. 1, there is shown a flowchart of a method 100 for scheduling charging of an electrical vehicle. As a non-limiting example, the electrical vehicle may herein be thought of as an electrical car. The method 100 comprises determining 10 a minimum state of charge for the electrical vehicle. The minimum state of charge may be set by a user of the electrical vehicle. Alternatively, the minimum state of charge may be set automatically, e.g., based on historical data related to the electrical vehicle. Another option is that the minimum state of charge is automatically suggested followed by approval, denial, or modification by the user. The method 100 further comprises determining a maximum 20 state of charge for the electrical vehicle. The maximum state of charge may be set similarly as the minimum state of charge, i.e., by the user, automatically, or a combination thereof. The method 100 further comprises determining 30 a scheduling function F1. The determination 30 of the scheduling function F1 is based on a temporally resolved probability P1 of that the electrical vehicle is connected to an electrical grid or not. The temporally resolved probability P1 may thereby be an ordinary function or discrete list, denoted p(t), having time, t, as its argument. The same applies for the scheduling function F1, typically denoted f(t). Hence, if, normally, the electrical vehicle is connected to the electrical grid during nights, p(t) has a larger value during nights than during daytime since the electrical vehicle is typically in use then. An example of the temporally resolved probability P1 is shown in Fig. 2A. It is further to be noted that temporally resolved probability P1 may vary significantly between the different day, e.g., between workdays and non-workdays. Hence, upon estimating a temporally resolved probability P1 for the next 12 or 24 hours, say, account may be taken based on the day of the week of concern, and not exclusively on, e.g., an average of a certain number of preceding days. This to distinguish between different user patterns between, e.g., a Sunday and a Wednesday of a typical week.

The determination 30 of the scheduling function is further based on a temporally resolved distribution of one or more of: available electrical power in the electrical grid, price for electrical power in the electrical grid, and CO2 emission for producing the electrical power in the electrical grid. As an example, in Fig. 2B the price Q1 for electrical power in the electrical grid over time is illustrated. The temporally resolved distribution, denoted q(t) below, is a function of similar kind as p(t) and f(t). The price Q1 for electrical power in the electrical grid may be represented by q(t). Additionally, or alternatively, the CO2 emission for producing the electrical power in the electrical grid may be represented by q(t). Alternatively, q(t) may represent a combined weighted function of price and CO2 emission. Further, weather forecasts, which possibly estimate the CO2 emission based on wind and sun hours, and/or predict price for electrical power in the electrical grid, may form part of q(t). Hence, it should be stressed that the function q(t) in Fig. 2B, being the price for electrical power in the electrical grid, serves as an example herein, and that this function may be a result of combining (or be replaced with) other measurable quantities per the above. Each of these temporally resolved distributions may be acquired from a service provider providing electrical power in the electrical grid. The temporally resolved distributions may have a temporal resolution of one hour, or finer (i.e., smaller time steps). Preferably, the temporal resolution should herein be one hour or finer. A finer temporal resolution may facilitate avoiding charging of the electrical vehicle should a sharp peak in price Q1 occur, or the like. Artificial increment of the temporal resolution may be done by interpolation of discrete function values such that a continuously differentiable (i.e., "soft") function may be estimated, whereafter the continuously differentiable function may be discretized again with a denser temporal resolution. Such an interpolation may be done in any suitable way, e.g., linear interpolation, second order interpolation, etc. This may apply to all types of temporally resolved functions or distributions described herein.

Spot prices for electrical power in the electrical grid are, in some countries/regions, released once a day providing price per kWh hour by hour (or possibly more often). By way of example, spot prices may be released at lunch time every day, and provides price information for the next 24 hours. The same may apply for CO2 emission for producing the electrical power in the electrical grid, or availability of electrical power in the electrical grid having low CO2 emission, and available electrical power in the electrical grid. It is however to be understood that an overall future estimation of CO2 emission for producing the electrical power in the electrical grid includes uncertainty since, e.g., wind and sun hours may unexpectedly change with relatively short notice. Hence, CO2 data in connection with this disclosure may be forecasts. However, the present disclosure may allow for partially or entirely charging the EV with electrical power originating from low CO2 emitting power plants if availability of such electrical power is possible. The price for electrical power is typically, to a certain extent, inversely proportional to the additional availability of electrical power in the electrical grid, where the additional availability originates from overproduction of electrical power in the electrical grid. Hence, at time points where price Q1 is relatively high in Fig. 2B, the availability is normally low, and vice versa. Further, the load on the electrical grid is typically proportional to the price Q1 for electrical power in the electrical grid. Hence, again, Fig. 2B may, to some extent, represent price Q1, load, and availability according to the above.

The scheduling function F1, f(t), is thereby a function depending on the temporally resolved probability P1, p(t), and the price Q1, q(t), for electrical power in the electrical grid, such that f(t) = f(p(t),q(t)), where it is understood that price Q1 may include load and/or availability of electrical power in the electrical grid. Additionally, or alternatively, the CO2 emission for producing electrical power in the electrical grid may be represented by q(t), as set out above. p(t) and q(t) may be combined in any suitable way. For instance, p(t) and q(t) may be combined in a linear fashion such that f(t) = k*p(t)/q(t), where k is a normalization factor that ensures that the temporally resolved probability P1, p(t), has a range between zero and one, i.e., 0 ≤ p(t) ≤ 1, or, at least, that p(t) does not exceed 1, i.e., 100%. It should be appreciated that the value of k may change from one day to another. However, preferably, k is constant during a specific scheduled time period, e.g., during the next 24 hours. Alternatively, p(t) and q(t) may be combined in an exponential fashion such that f(t) = (p(t)/q(t))^{k}, where k, again, is a normalization factor ensuring that the temporally resolved probability ranges between 0 and 1, according to linear case above. It should be appreciated that F1 is not necessarily determined from any of the above linear or exponential relationships between p(t) and q(t); Fig. 2C merely serves as a fictious example. Further, the skilled person is expected to appreciate many variations for f(t) containing p(t) and q(t) within the scope of the claims.

The method 100 further comprises determining 40 one or more mandatory charging time periods T1, T2, T3 upon which charging of the electrical vehicle is mandatory in order to reach the minimum state of charge. The determining 40 is based on a current state of charge, a time upon which the electrical vehicle is scheduled to be used again, a charging speed, the scheduling function, and the minimum state of charge. The time upon which the electrical vehicle is scheduled to be used again may be set manually by the user, or set automatically by, e.g., acquiring information from the temporally resolved probability P1 of that the electrical vehicle is connected to the electrical grid. Alternatively, the time upon which the electrical vehicle is scheduled to be used again may be suggested according to the temporally resolved probability P1, and, subsequently, be confirmed, denied, or adjusted by the user. The term charging speed may refer to how fast a charger may charge a battery of the electrical vehicle. Put in context with modern (year 2022) electrical vehicle chargers and batteries, a typical charger may provide a charging speed of approximately 10 kWh per hour. Hence, charging of a car battery having a 100-kWh capacity ideally requires ten hours of constant charging if the initial state of charge is 0% and the final state of charge is 100%, and provided charging speed is independent of any intermediate state of charge thereof. It is noted that charging from 0% to 100% is normally highly unlikely. Typically, daily charging of an electrical vehicle having a 100kWh battery is in the range of 20%-50% of the full capacity of the battery. Further, it must be expected that the above numbers may be significantly different within a near future due to the presently rapid development of batteries, electrical vehicles, etc.

The method 100 further comprises determining 50 one or more potential charging time periods TP1, TP2, TP3, TP4 upon which charging of the electrical vehicle is potential in order to reach the maximum state of charge. The determining 50 is based on the current state of charge, the time upon which the electrical vehicle is scheduled to be used again, the charging speed, the scheduling function, and the maximum state of charge.

The method 100 further comprises scheduling 60 charging of the electrical vehicle during the one or more mandatory charging time periods T1, T2, T3; see Fig. 2C. The number of mandatory charging time periods T1, T2, T3 may preferably be between one and ten, but other numbers may equally well apply. The one or more mandatory charging time periods T1, T2, T3 are defined by intersection between a first level N1, where f(t) is constant over time, and the scheduling function F1. Hence, in this example (Fig. 2C) there are six intersection points between the first level N1 and the scheduling function, defining the three charging time periods T1, T2, T3. The first level N1 is calculated based on the determination 40 of the one or more mandatory charging time periods T1, T2, T3 according to the above. The sum of the time of the mandatory charging time periods T1, T2, T3 thereby, again, represent the minimum time required for charging the electrical vehicle in order to reach the minimum state of charge.

Non-charging time periods TN1, TN2 are defined by intersection between a second level N2, where f(t) is constant over time, and the scheduling function F1. Hence, function values of the scheduling function F1 being below the second level N2 corresponds to non-charging time periods TN1, TN2.

Function values of the scheduling function F1 being between N1 and N2 correspond to potential charging time periods TP1, TP2, TP3, TP4 calculated based on the determination 50 of the one or more potential charging time periods TP1, TP2, TP3, TP4 according to the above.

Generally, the first level N1 and the second level N2 differ. This facilitates optional charging in an economic and/or environmental-friendly manner. A larger function value of the scheduling function F1 is in a specific potential charging time period, may correspond to a higher priority for charging within such a specific potential charging time period, and vice versa.

The method 100 further comprises scheduling 70 charging of the electrical vehicle during a potential charging time period. The charging of the electrical vehicle during the potential charging time period is scheduled upon available electrical power in the electrical grid for the potential charging time period is above an electrical power threshold, the price for electrical power in the electrical grid for the potential charging time period is below a price threshold, and/or the CO2 emission for producing the electrical power in the electrical grid for the potential charging time period is below a CO2 threshold.

The method 100 may further comprise one or more of determining the electrical power threshold as a percentage above an historical average of available electrical power in the electrical grid, determining the price threshold as a percentage below an historical average of price for electrical power, determining the CO2 threshold as a percentage below an historical average of CO2 emission for producing the electrical power in the electrical grid. The price threshold and the CO2 threshold may be a combined threshold based on price data and CO2 data. As set out above, the historical average may be an average being relatively recent in time. This since available electrical power, price, and CO emission may vary heavily over full year due to, e.g., weather, temperature, and general domestic consumption of electrical power. Hence, an historical average may be an average taken during similar circumstances regarding, e.g., weather, temperature, and general domestic consumption of electrical power. By way of example, the historical average may be an hourly average of the preceding day or an hourly average of the preceding week to facilitate accuracy of the above determined quantities. The CO2 threshold as a percentage below the historical average of CO2 emission for producing the electrical power in the electrical grid may not be feasible due to uncontrollable factors such as wind or sun hours, i.e., on cloudy and/or windless days. In such cases, the CO2 threshold may be as low as possible while still having the possibility of charging the electrical vehicle using at least some sustainable electrical energy.

The method 100 may further comprise determining the temporally resolved probability based on temporally resolved historical data whether the electrical vehicle was connected to the electrical grid or not. For the majority of users, the electrical vehicle is connected to the electrical grid during night. Hence, for such majority of users the temporally resolved probability is higher during night than during daytime. The resolution of a time axis may be at least one or more data points (i.e., values of probability) for each hour to facilitate accuracy. The temporally resolved distribution of one or more of available electrical power in the electrical grid, price for electrical power in the electrical grid, and CO2 emission for producing the electrical power in the electrical grid may extend into a time region where the probability is relatively low to account for the event of the electrical vehicle being connected to the electrical grid unusually early in the afternoon or evening, etc. This to secure a cheap charging of the electrical vehicle and/or low CO2 emission for producing the electrical power.

The determination of the temporally resolved probability P1 may further be based on if the electrical vehicle is currently connected to the electrical grid or not.

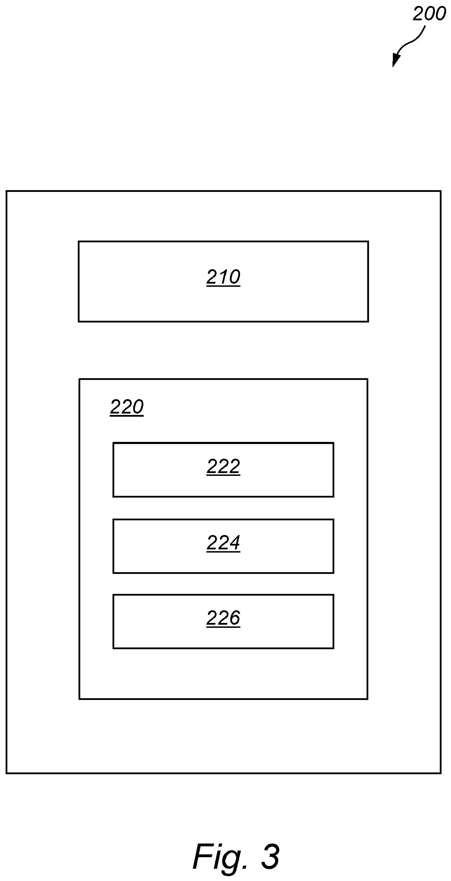

In connection with Fig. 3, there is shown a server 200 for scheduling charging of an electrical vehicle. Many features of the server 200 have already been described in connection with the method 100, i.e., in connection with Figs 1 and 2A-2C. Hence, to avoid undue repetition, reference is made to the above when applicable.

The server 200 comprises a transceiver 210. The transceiver 210 is configured to communicate with one or more external devices. The one or more external devices may be one or more of a mobile phone, an electrical vehicle charger, the electrical vehicle itself, or any other suitable device. The communication between the transceiver 210 and the one or more external devices may comprise wired or wireless communication of data; preferably wireless, such as via the cellular-based networks, Bluetooth, Wi-Fi, or the like. The one or more external devices provides a minimum state of charge for the electrical vehicle, a maximum state of charge for the electrical vehicle, current state of charge for the electrical vehicle, a time upon which the electrical vehicle is scheduled to be used again, and a charging speed for the electrical vehicle.

The server 200 further comprises circuitry 220. The circuitry 220 is configured to carry out overall control of procedures 222, 224, 226 and operations of the server 200. The circuitry 220 may include a processor, such as a central processing unit (CPU), microcontroller, or microprocessor. The processor is configured to execute program code stored in the circuitry to carry out functions and operations of the electronic device 400.

Executable procedures 222, 224, 226, further described below, may be stored on a memory. The memory may be one or more of a buffer, a flash memory, a hard drive, a removable media, a volatile memory, a non-volatile memory, a random access memory (RAM), or other suitable devices. In a typical arrangement, the memory may include a non-volatile memory for long term data storage and a volatile memory that functions as system memory for the circuitry 220. The memory may exchange data with the circuitry 220 over a data bus. Accompanying control lines and an address bus between the memory and the circuitry 220 may be present.

Procedures 222, 224, 226 and operations of the circuitry 220 may be embodied in the form of executable logic routines, e.g., computer-code portions, software programs, etc., that are stored on a non-transitory computer readable medium, e.g., the memory, of the server 200 and are executed by the circuitry 220 by, e.g., using the processor. The procedures 222, 224, 226 and operations of the server 200 may be a stand-alone software application or form a part of a software application that carries out additional tasks related to the server 200. The described procedures 222, 224, 226 and operations may be considering a method (100) that the corresponding device is configured to carry out. Also, while the described procedures 222, 224, 226 and operations may be implemented in a software, such functionality may as well be carried out via dedicated hardware or firmware, or some combination of hardware, firmware and/or software.

The circuitry 220 is configured to execute a scheduling function determining procedure 222 configured to determine a scheduling function F1 based on a temporally resolved probability P1 of that the electrical vehicle is connected to an electrical grid, and a temporally resolved distribution of one or more of: available electrical power in the electrical grid, price Q1 for electrical power in the electrical grid, and CO2 emission for producing the electrical power in the electrical grid.

The circuitry 220 is further configured to execute a charging time determining procedure 224 configured to determine one or more mandatory charging time periods T1, T2, T3 upon which charging of the electrical vehicle is mandatory in order to reach the minimum state of charge. The charging time determining procedure 224 is configured to determine the one or more mandatory charging time periods T1, T2, T3 based on the current state of charge, the time upon which the electrical vehicle is scheduled to be used again, the charging speed, the scheduling function F1, and the minimum state of charge. The charging time determining procedure 224 is further configured to determine one or more potential charging time periods TP1, TP2, TP3, TP4 upon which charging of the electrical vehicle is potential in order to reach the maximum state of charge. The charging time determining procedure 224 is configured to determine the one or more potential charging time periods TP1, TP2, TP3, TP4 based on the current state of charge, the time upon which the electrical vehicle is scheduled to be used again, the charging speed, the scheduling function F1, and the maximum state of charge.

The circuitry is further configured to execute a charging procedure 226 configured to schedule charging of the electrical vehicle during the one or more mandatory charging time periods T1, T2, T3. The charging procedure 226 is further configured to schedule charging of the electrical vehicle during a potential charging time period upon available electrical power in the electrical grid for the potential charging time period is above an electrical power threshold, the price for electrical power in the electrical grid for the potential charging time period is below a price threshold, and/or the CO2 emission for producing the electrical power in the electrical grid for the potential charging time period is below a CO2 threshold.

The circuitry 220 may further be configured to execute one or more of an electrical power threshold determining procedure configured to determine the electrical power threshold as a percentage above an historical average of available electrical power in the electrical grid, a price threshold determining procedure configured to determine the price threshold as a percentage below an historical average of price for electrical power, and a CO2 threshold determining procedure configured to determine the CO2 threshold as a percentage below an historical average of CO2 emission for producing the electrical power in the electrical grid.

The circuitry 220 may be further configured to execute a probability procedure configured to determine the temporally resolved probability P1 based on temporally resolved historical data whether the electrical vehicle was connected to the electrical grid or not.

The transceiver 210 may further be configured to communicate with an external device providing information pertaining to if the electrical vehicle is currently connected to the electrical grid or not, and wherein the probability procedure is further configured to determine the temporally resolved probability based on if the electrical vehicle is currently connected to the electrical grid or not.

## Claims

1. A computer implemented method (100) for scheduling charging of an electrical vehicle, the method (100) comprising:
determining (10) a minimum state of charge for the electrical vehicle;
determining (20) a maximum state of charge for the electrical vehicle;
determining (30) a scheduling function (F1) based on:
a temporally resolved probability (P1) of that the electrical vehicle is connected to an electrical grid, and
a temporally resolved distribution of one or more of:
available electrical power in the electrical grid,
price (Q1) for electrical power in the electrical grid, and
CO2 emission for producing the electrical power in the electrical grid;
determining (40) one or more mandatory charging time periods (T1, T2, T3) upon which charging of the electrical vehicle is mandatory in order to reach the minimum state of charge based on a current state of charge, a time upon which the electrical vehicle is scheduled to be used again, a charging speed, the scheduling function (F1), and the minimum state of charge;
determining (50) one or more potential charging time periods (TP1, TP2, TP3, TP4) upon which charging of the electrical vehicle is potential in order to reach the maximum state of charge based on the current state of charge, the time upon which the electrical vehicle is scheduled to be used again, the charging speed, the scheduling function (F1), and the maximum state of charge;
scheduling (60) charging of the electrical vehicle during the one or more mandatory charging time periods (T1, T2, T3); and
scheduling (70) charging of the electrical vehicle during a potential charging time period upon:
available electrical power in the electrical grid for the potential charging time period is above an electrical power threshold,
the price for electrical power in the electrical grid for the potential charging time period is below a price threshold, and/or
the CO2 emission for producing the electrical power in the electrical grid for the potential charging time period is below a CO2 threshold.

2. The method (100) according to claim 1, further comprising one or more of:
determining the electrical power threshold as a percentage above an historical average of available electrical power in the electrical grid;
determining the price threshold as a percentage below an historical average of price for electrical power; and
determining the CO2 threshold as a percentage below an historical average of CO2 emission for producing the electrical power in the electrical grid.

3. The method (100) according to claim 1, further comprising determining the temporally resolved probability (P1) based on temporally resolved historical data whether the electrical vehicle was connected to the electrical grid or not.

4. The method (100) according to claim 3, wherein determining the temporally resolved probability (P1) is further based on if the electrical vehicle is currently connected to the electrical grid or not.

5. A non-transitory computer-readable storage medium having stored thereon program code portions for implementing the method (100) according to any one of claims 1-4 when executed on a device having processing capabilities.

6. A server (200) for scheduling charging of an electrical vehicle, the server (200) comprising
a transceiver (210) configured to communicate with one or more external devices providing:
a minimum state of charge for the electrical vehicle,
a maximum state of charge for the electrical vehicle,
current state of charge for the electrical vehicle,
a time upon which the electrical vehicle is scheduled to be used again, and
a charging speed for the electrical vehicle; and
circuitry (220) configured to execute:
a scheduling function determining procedure (222) configured to determine a scheduling function (F1) based on a temporally resolved probability (P1) of that the electrical vehicle is connected to an electrical grid, and a temporally resolved distribution of one or more of:
available electrical power in the electrical grid,
price (Q1) for electrical power in the electrical grid, and
CO2 emission for producing the electrical power in the electrical grid,
a charging time determining procedure (224) configured to:
determine one or more mandatory charging time periods (T1, T2, T3) upon which charging of the electrical vehicle is mandatory in order to reach the minimum state of charge based on the current state of charge, the time upon which the electrical vehicle is scheduled to be used again, the charging speed, the scheduling function, and the minimum state of charge, and
determine one or more potential charging time periods (TP1, TP2, TP3, TP4) upon which charging of the electrical vehicle is potential in order to reach the maximum state of charge based on the current state of charge, the time upon which the electrical vehicle is scheduled to be used again, the charging speed, the scheduling function (F1), and the maximum state of charge,
a charging procedure (226) configured to:
schedule charging of the electrical vehicle during the one or more mandatory charging time periods (T1, T2, T3), and
schedule charging of the electrical vehicle during a potential charging time period upon:
available electrical power in the electrical grid for the potential charging time period is above an electrical power threshold,
the price for electrical power in the electrical grid for the potential charging time period is below a price threshold, and/or
the CO2 emission for producing the electrical power in the electrical grid for the potential charging time period is below a CO2 threshold.

7. The server (200) according to claim 6, wherein the circuitry (220) is further configured to execute one or more of:
an electrical power threshold determining procedure configured to determine the electrical power threshold as a percentage above an historical average of available electrical power in the electrical grid;
a price threshold determining procedure configured to determine the price threshold as a percentage below an historical average of price for electrical power; and
a CO2 threshold determining procedure configured to determine the CO2 threshold as a percentage below an historical average of CO2 emission for producing the electrical power in the electrical grid.

8. The server according to claim 6, wherein the circuitry (220) is further configured to execute a probability procedure configured to determine the temporally resolved probability (P1) based on temporally resolved historical data whether the electrical vehicle was connected to the electrical grid or not.

9. The server (200) according to claim 8, wherein the transceiver (210) is further configured to communicate with an external device providing information pertaining to if the electrical vehicle is currently connected to the electrical grid or not, and wherein the probability procedure is further configured to determine the temporally resolved probability (P1) based on if the electrical vehicle is currently connected to the electrical grid or not.
